(19) Europäisches Patentamt
European Patent Office
Office européen des brevets

(11) **EP 4 583 006 A1**

(12) **EUROPEAN PATENT APPLICATION**

(43) Date of publication:
**09.07.2025 Bulletin 2025/28**

(21) Application number: **25150167.2**

(22) Date of filing: **03.01.2025**

(51) International Patent Classification (IPC):
*G06N 3/094* (2023.01)   *G06N 3/045* (2023.01)
*G06N 3/09* (2023.01)    *G06N 5/01* (2023.01)
*G06N 3/063* (2023.01)

(52) Cooperative Patent Classification (CPC):
**G06N 3/045; G06N 3/09; G06N 3/094; G06N 5/01;**
G06N 3/0464; G06N 3/063

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.01.2024 KR 20240001164**
          **30.12.2024 KR 20240200292**

(71) Applicant: **Samsung Electronics Co., Ltd.**
**Suwon-si, Gyeonggi-do 16677 (KR)**

(72) Inventors:
• **AHN, Chanho**
**16678 Suwon-si (KR)**
• **KIM, Kikyung**
**16678 Suwon-si (KR)**
• **HAN, Seungju**
**16678 Suwon-si (KR)**
• **SUH, Sungjoo**
**16678 Suwon-si (KR)**

(74) Representative: **Arnold & Siedsma**
**Bezuidenhoutseweg 57**
**2594 AC The Hague (NL)**

(54) **METHOD AND APPARATUS WITH AI MODEL PERFORMANCE MEASURING USING PERTURBATION**

(57)    A device for measuring performance of an artificial intelligence (AI) model includes: one or more processors and a memory; and the memory storing instructions configured to cause the one or more processors to perform a process including: determining perturbations for respective classes based on respective class importances and adding noises determined based on the respective perturbations to respective representative vectors of the respective classes; and generating an inference uncertainty of the AI model from inference results outputted by the AI model using a weight matrix including the noise-added representative vectors.

**EP 4 583 006 A1**

**Description**

BACKGROUND OF THE INVENTION

1. Field

The present disclosure relates to a method for measuring performance of an artificial intelligence (AI) model using perturbation, and an apparatus using the same.

2. Description of the Related Art

Technology that classifies input data using an AI model is used in a variety of fields such as image recognition, autonomous driving, and remote medicine. In addition, there is an ongoing effort to study and research how to lower the uncertainty and increase reliability of AI models.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.
In one general aspect a computer-implemented method for measuring performance of an artificial intelligence (AI) model, wherein the AI model is trained to infer classes, includes: determining noises based on perturbations; adding the noises to respective representative vectors corresponding to respective classes for an input image determined by a linear classifier of the AI model; and generating an inference uncertainty of the AI model for the input image based on inference results outputted by the linear classifier of the AI model using the noise-added representative vectors.
The determining noises based on perturbations may include: sampling the noises in a noise distribution that follows standard normal distribution; and scaling the sampled noise by a size of the perturbation.
The sampling the noises in the noise distribution that follows standard normal distribution may include independently sampling the noises for the respective classes in the noise distribution.
The adding the noises to respective representative vectors may include independently adding the noise to each of the respective representative vectors. The sampling the noises in the noise distribution that follows standard normal distribution may comprise independently sampling the noises for the respective classes in the noise distribution.
The process may further include determining the perturbations in proportion to the respectively corresponding importances of the respective classes.
The inference results may correspond to class classification results of feature vectors of an image generated by an encoder of the AI model, and the class classification results can be determined by the feature vectors being classified into a class of the respective classes by the linear classifier using the noise-added representative vectors.
The process may further include receiving a predetermined number of class classification results from the linear classifier as the inference results.
The process may further include determining the inference uncertainty of the AI model based on a standard deviation of the inference results. The process may include determining whether the standard deviation of the inference results satisfies a predetermined deviation threshold condition.
The inference results of the AI model may be not used as a final result based on a determination that the standard deviation of the inference results satisfies a predetermined deviation threshold condition, or the inference result of the AI model may be used as a final result based on a determination that the standard deviation of the inference results does not satisfy the condition of the predetermined deviation threshold condition.
The standard deviation may be statistically determined from score vectors output as the inference results.
Maximal elements in the respective score vectors may be in a same position within the score vectors.
Further, a device is provided for measuring performance of an artificial intelligence, AI, model, wherein the AI model is trained to infer classes the device comprising: one or more processors and a memory; and the memory storing instructions configured to cause the one or more processors to perform the method of any one of the previous method embodiments.
Further, a computer program is provided comprising instructions which, when the program is executed by a computer, cause the computer to carry out the steps of any one of the previous method embodiments for measuring performance.
In another general aspect, a computer-implemented method for training an artificial intelligence (AI) model to infer classes includes: adding noises determined based on respective perturbations to respective representative vectors corresponding to respective classes; updating the perturbations in response to the AI model being trained using a weight matrix comprising the noise-added representative vectors; and determining to terminate training of the AI model based on the updated perturbations.

The adding noises determined based on respective perturbations to respective representative vectors corresponding to respective classes may include: sampling the noises in a noise distribution that follows normal distribution; scaling the sampled noises by sizes of the respective perturbations; and adding the scaled noises to the respective representative vectors.

The sampling the noises in noise distribution that follows normal distribution may include independently sampling the noises for the respective classes in the noise distribution.

The adding noises determined based on respective perturbations to respective representative vectors corresponding to respective classes may include: sampling a first noise to be added to a first representative vector of the representative vectors from a noise distribution that follows normal distribution and sampling a second noise to be added to a second representative vector of the representative vectors from the noise distribution; and adding the first noise to the first representative vector and adding the second noise to the second representative vector.

Sizes of the updated perturbations may be larger than sizes of the perturbations before the updating of the perturbations.

The determining to terminate training of the AI model based on the updated perturbations may include comparing sizes of the updated perturbations with a predetermined perturbation reference value.

The process may further include: generating class uncertainties of the respective classes based on the updated perturbations; and determining to terminate training of the AI model based on the class uncertainties of the respective classes.

Further, a device is provided for training an artificial intelligence, AI, model to infer classes the device comprising: one or more processors and a memory; and the memory storing instructions configured to cause the one or more processors to perform the method of any one of the previous method embodiments for training an AI model to infer classes.

Further, a computer program is provided comprising instructions which, when the program is executed by a computer, cause the computer to carry out the steps of any one of the previous method embodiments for training an AI model to infer classes.

In another general aspect, a method for measuring performance of an artificial intelligence (AI) model used for classification of inputs performed by one or more processors includes: determining perturbations based on respective class importances; adding noises determined based on perturbations that are previously determined for respective classes to representative vectors respectively corresponding to the classes, wherein the AI model has been trained to infer the classes for the inputs thereto; receiving inference results for an input outputted from the AI model using the noise-added representative vectors; and generating an inference uncertainty of the AI model based on the inference results.

The input may be an image of a semiconductor product generated during the semiconductor manufacturing process.

In a further aspect, devices and methods according to the following clauses are provided:

Clause 1: A device for measuring performance of an artificial intelligence, AI, model, the device comprising: one or more processors and a memory; and the memory storing instructions configured to cause the one or more processors to perform a process comprising:

determining perturbations for respective classes based on respective class importances and adding noises determined based on the respective perturbations to respective representative vectors of the respective classes; and
generating an inference uncertainty of the AI model from inference results outputted by the AI model using a weight matrix comprised of the noise-added representative vectors.

Clause 2. The device of clause 1, wherein:

the process further comprises sampling the noises in a noise distribution that follows standard normal distribution, scaling the sampled noise by a size of the perturbation, and
the adding noise determined based on the perturbation to representative vectors of the respective classes comprises adding the scaled noises to the respective representative vectors.

Clause 3. The device of clause 2, wherein the sampling the noises in the noise distribution that follows standard normal distribution comprises independently sampling noises for the respective classes in the noise distribution.

Clause 4. The device of clause 1, wherein the adding noises determined based on the perturbations to respective representative vectors of the classes comprises independently adding the noise to the respective representative vectors comprised in the weight matrix, the representative vectors respectively corresponding to the classes.

Clause 5. The device of clause 4, wherein the determining the perturbations of the respective classes based on the respective class importances is performed such that determining the perturbations in proportion to the respectively corresponding importances of the respective classes.

Clause 6. The device of clause 1, wherein

the inference results are outputted by the AI model based on a same input item, and wherein
the process further comprises determining the inference uncertainty of the AI model based on a standard deviation of the inference results.

Clause 7. The device of clause 6, wherein:

the inference results of the AI model are not used as a final result based on a determination that the standard deviation of the inference results satisfies a predetermined deviation threshold condition, or
the inference result of the AI model is used as a final result based on a determination that the standard deviation of the inference results does not satisfy the condition of the predetermined deviation threshold.

Clause 8. The device of clause 6, wherein:
the standard deviation is statistically determined from score vectors output as the inference results.

Clause 9. The device of clause 8, wherein maximal elements in the respective score vectors are in a same position within the score vectors.

Clause 10. A device for training an artificial intelligence, AI, model, the device comprising:

one or more processors and a memory; and
the memory storing instructions configured to cause the one or more processors to perform a process comprising:

adding noises determined based on respective perturbations to respective representative vectors corresponding to respective classes, and updating the perturbations in response to the AI model being trained using a weight matrix comprising the noise-added representative vectors; and
determining to terminate training of the AI model based on the updated perturbations.

Clause 11. The device of clause 10, wherein the process further comprises: sampling the noises in a noise distribution that follows standard normal distribution; scaling the sampled noises by sizes of the respective perturbations; and adding the scaled noises to the respective representative vectors.

Clause 12. The device of clause 11, wherein

the sampling the noises in noise distribution that follows standard normal distribution comprises independently sampling the noises for the respective classes in the noise distribution.

Clause 13. The device of clause 10, wherein the process further comprises: independently adding the noises to the respective representative vectors comprised in the weight matrix, the representative vectors corresponding to the respective classes.

Clause 14. The device of clause 10, wherein sizes of the updated perturbations are larger than sizes of the perturbations before the updating of the perturbations.

Clause 15. The device of clause 10, where the determining to terminate training of the AI model based on the updated perturbations comprises comparing sizes of the updated perturbations with a predetermined perturbation reference value.

Clause 16. The device of clause 10, wherein the process further comprises:

in response to the training of the AI model being terminated, generating class uncertainties of the respective classes based on the updated perturbations; and
determining to terminate training of the AI model based on the class uncertainties of the respective classes.

Clause 17. A method for measuring performance of an artificial intelligence, AI, model performed by one or more processors, the method comprising:

determining perturbations for respective classes based on respective class importances, wherein the AI model has been trained to infer the classes for inputs thereto;
determining noises based on the respective perturbations and adding the noises to representative vectors respectively corresponding to the classes; and
using a weight matrix that includes the noise-added representative vectors to generate an inference uncertainty of the AI model based on inference results outputted from the AI model.

Clause 18. The method of clause 17, wherein:
the determining the noises based on the respective perturbations and the adding the noises to the representative vectors respectively corresponding to the classes comprises:

sampling the noises in a noise distribution that follows standard normal distribution;
scaling the sampled noises according to corresponding sizes of the perturbations; and
adding the scaled noises to the respectively corresponding representative vectors.

Clause 19. The method of clause 17, wherein the perturbations are scaled according to the respectively corresponding class importances.

Clause 20. The method of clause 17, wherein:

the calculating the inference uncertainty of the AI model based on the inference results outputted from the AI model using the weight matrix that comprises the noise-added representative vectors comprises
determining a standard deviation of the inference results outputted by the AI model from a same input item as the inference uncertainty of the AI model.

Other features and aspects will be apparent from the following detailed description, the drawings, and the claims.

BRIEF DESCRIPTION OF THE DRAWINGS

FIG. 1 illustrates a training device of an AI model according to one or more embodiments.
FIG. 2 illustrates a training method of the AI model according to one or more embodiments.
FIG. 3 illustrates a training system of an AI model according to one or more embodiments.
FIG. 4 illustrates an inference device using an AI model according to one or more embodiments.
FIG. 5 illustrates an inference method using an AI model according to one or more embodiments.
FIG. 6 illustrates a neural network according to one or more embodiments.
FIG. 7 illustrates a system for measuring performance of an AI model according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

An artificial intelligence (AI) model according to the present disclosure is a machine learning model that learns at least one task, and may be implemented as a computer program executed by a processor. A task learned by the AI model may refer to a task to be solved through machine learning or a task to be performed through machine learning. The AI model may be implemented as a computer program running on a computing device, downloaded through a network, or sold in product form. Alternatively, the AI model may be linked with various devices through the network.

To quantify the uncertainty of an AI model, the uncertainty of the AI model may be determined based on changes in the prediction distribution of the AI model by randomly dropping out some parameters of the model during AI model inference. In addition, mix-up of input data can be used to measure the uncertainty of the AI model.

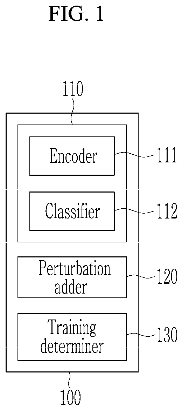

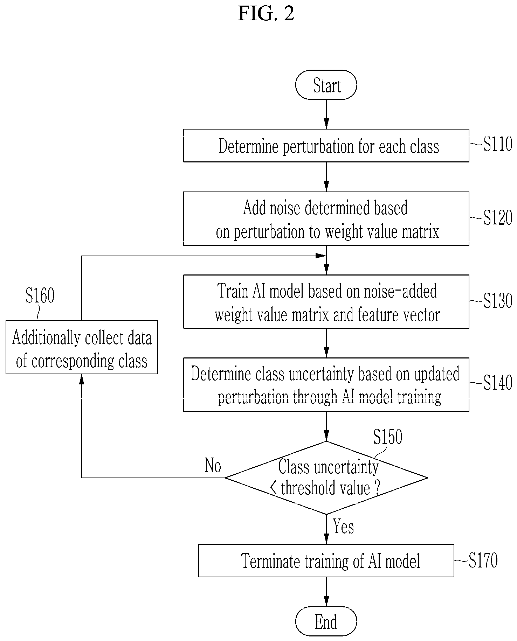

FIG. 1 illustrates a training device of an AI model according to one or more embodiments and FIG. 2 illustrates a method of training the AI model according to one or more embodiments.

Referring to FIG. 1, a training device 100 according to some embodiments may include an AI model 110, a perturbation adder 120 (or, "perturber"), and a training determiner 130.

In some embodiments, the AI model 110 may include an encoder 111 and a classifier 112 (e.g., a linear classifier). The encoder 111 may extract features of data input to the AI model 110 and generate feature vectors. The classifier 112 may determine a class of the input data through an operation between a weight matrix configured for classification of the input data and the feature vectors of the input data. In some embodiments, noises based on perturbations of the respective classes may be added to the weight matrix of the classifier 112.

In some embodiments, the AI model 110 may be trained to classify the input data into the classes. The input data may be an image, a text, voice, and the like, and the classes may be any variety of categories to which the input data belongs and may be the purpose of classification by the AI model 110. For example, the input data may be images of roads and backgrounds thereof acquired during autonomous driving of a vehicle. Further, the classes/categories may be of the types of objects (people, vehicles, road structures, traffic signal devices, lanes, crosswalk, and the like) included in the road images.

In some embodiments, the input data may be a product image of a produce captured during a process of manufacturing the product (e.g., an image of a semiconductor wafer). In embodiments for images of products, the classes may represent respective types of defect that occur during the manufacturing process of the products. For example, the classes may be contamination, foreign substances, broken, state of soldering marks (balls), character abnormality, and/or the like.

In some embodiments, the classifier 112 of the AI model 110 may use a weight matrix to convert a feature vector of data outputted by the encoder 111 into a score vector whose dimension is the number of classes (each element of the score vector being a score or probability of the input data being in the corresponding class). Equation 1 below represents a linear classification process performed in the classifier 112.

Equation 1

$$f(\boldsymbol{x}, \boldsymbol{W}, \boldsymbol{b}) = \boldsymbol{W}^T \boldsymbol{x} + \boldsymbol{b}$$

In Equation 1, $\boldsymbol{W}$ denotes a weight matrix of the classifier 112 ($\boldsymbol{W}^T$ denotes the transposed matrix of the weight matrix $\boldsymbol{W}$), $\boldsymbol{x}$ denotes a feature vector of data output from the encoder 111, and $\boldsymbol{b}$ denotes a bias vector that affects/biases scores without interaction with the feature vector. When the feature vector $\boldsymbol{x}$ inputted to the classifier 112 has dimension n and when the number of classes is m, the weight matrix may have a dimension of $n \times m$.

In some embodiments, the classifier 112 may convert the feature vector of the input data to a score vector that represents scores for each class through an operation such as Equation 1.

In some embodiments, the weight matrix of the classifier 112 may be a set of class-representative vectors respectively corresponding to the classes. Equation 2 represents a weight matrix $\boldsymbol{W}$ of the classifier 112.

Equation 2

$$W = [\boldsymbol{w_1}, \boldsymbol{w_2}, \dots, \boldsymbol{w_m}]$$

Referring to Equation 2, the weight matrix $\boldsymbol{W}$ includes representative vectors $\boldsymbol{W}_i$ (i=1 to m) respectively corresponding to the classes. That is, the weight matrix may consist of m representative vectors of m respective classes. Equation 3 represents a representative vector $\boldsymbol{W}_i$ of an i-th class.

Equation 3

$$\boldsymbol{w}_i = \begin{bmatrix} w_{1,i} \\ w_{2,i} \\ \vdots \\ w_{n,i} \end{bmatrix}$$

In Equation 3, the representative vector $\boldsymbol{W}_i$ of the i-th class may include n weight values ($w_{1,i}$ to $w_{n,i}$). A score of a feature vector for the i-th class may be determined by a matrix multiplication operation between the feature vector and the representative vector $\boldsymbol{W}_i$ of the i-th class.

In some embodiments, elements of a score vector representing a result of linear classification on an input item may include scores of vectors for each of the respective classes with respect to the input item. In addition, a given score in the score vector may represent the probability that the input item of the feature vector belongs to the class corresponding to the given score. The dimension of the score vector is equal to the number of classes, which is m. An i-th element of the score vector corresponding to the i-th class may be determined by a matrix multiplication operation between the feature vector and the representative vector of the i-th class.

In some embodiments, the perturbation adder 120 may add, to the weight matrix of the classifier 112, noises determined based on perturbations and update the perturbations through training of the AI model 110. In some embodiments, during training of the AI model 110, the perturbation adder 120 may update the perturbations (e.g., values/sizes thereof) in a direction that increases the perturbations for each class.

In some embodiments, when a training cycle (epoch) of the AI model 110 is terminated, the training determiner 130 may determine whether or not the training of the AI model 110 is to be terminated based on updated perturbations of the respective classes. In some embodiments, the training determiner 130 may terminate the training of the AI model 110 in response to the sizes of the updated perturbations of the respective classes each being larger than a perturbation reference value.

Alternatively, the training determiner 130 may calculate the class uncertainties of the respective classes based on the updated perturbations and terminate the training of the AI model 110 in response to the class uncertainties of the respective classes each being smaller than the uncertainty reference. When the size of the updated perturbation of one of the classes is smaller than the perturbation reference value or the class uncertainty of one of the classes is larger than the uncertainty reference value, the training determiner 130 may determine that the AI model 110 needs to be additionally trained for the corresponding class. A large class uncertainty for a specific class may mean that the amount of data belonging to that class is insufficient or that data with incorrect labels exists.

Referring to FIG. 2, the perturbation adder 120 may determine the perturbations of the respective classes (S110). In some embodiments, the perturbation adder 120 may use the standard deviation $\sigma$ (or variance ($\sigma^2$) of the noise distribution from which the noise is sampled as the perturbation for each class. The perturbations may be determined as scalar values. The noise distribution may follow the normal distribution (i.e., Gaussian distribution) or standard normal distribution, for example.

In some embodiments, the perturbation adder 120 may independently determine the perturbations of the respective classes. For example, for i and j (here, i≠j), the perturbation for the i-th class may be $\sigma_i$, and the perturbation for the j-th class may be $\sigma_j$. The perturbations independently determined for the respective classes may be updated to various magnitudes/values according to the training of the AI model 110.

In some embodiments, the perturbation adder 120 may determine the noise for a class based on the perturbation of the class and may then add the determined noise to the representative vector of the class (S120) (this may be done for each of the classes). For example, the perturbation adder 120 may randomly sample the noise for the i-th class from the noise distribution (average=0, normal distribution of standard deviation=$\sigma_i$) representing the standard deviation of $\sigma_i$ and may then add the sampled noise to the representative vector of the i-th class (which may be done for each class). Alternatively, the perturbation adder 120 may randomly sample the noise for the i-th class from a standard normal distribution (average=0, standard deviation=1), multiply the sampled noise by the perturbation $\sigma_i$, and then add the noise multiplied by the perturbation into the representative vector of the i-th class. The noise sampled from the normal distribution of standard deviation $\sigma_i$ and the noise sampled from the standard normal distribution and then multiplied by the perturbation $\sigma_i$ may be the same. That is, the noise may be scaled by the perturbation.

Equation 4 represents a representative vector $\boldsymbol{W}'_i$ (of the i-th class) to which the noise according to the corresponding perturbation is added.

$$\text{Equation 4}$$

$$\boldsymbol{w}'_i = \boldsymbol{w}_i + \sigma_i \boldsymbol{N} = \begin{bmatrix} w_{1,i} + \sigma_i N_1 \\ w_{2,i} + \sigma_i N_2 \\ \vdots \\ w_{n,i} + \sigma_i N_n \end{bmatrix}$$

In Equation 4, N represents a noise vector randomly sampled from the noise distribution and includes $N_1$ to $N_n$ as its elements. The size of the perturbation may indicate/control the level of noise to be added to the representative vector of the class. The larger the size of the perturbation $\sigma$, the larger the noise that is added to the representative vector of the class, and the smaller the size of the perturbation $\sigma$, the smaller the noise that is added to the representative vector of the class.

In some embodiments, the noise to be added to the representative vector of the i-th class and the noise to be added to the representative vector of the j-th class may be independently sampled from the noise distribution. For example, the perturbation adder 120 may independently perform sampling of the noise to be added to the representative vector of the i-th class and independently perform sampling of the noise to be added to the representative vector of the j-th class. Alternatively, the perturbation adder 120 may sample noises from the noise distribution, multiply the sampled noises by the perturbations of the respective classes, and add the multiplication results to the representative vectors of the respective classes.

Referring to FIG. 2, the AI model 110 may be trained, with a training set, based on an operation between (i) the feature vector (of input data) outputted from the encoder 111 and (ii) a weight matrix to which the noise is added by the perturbation adder 120 (S130).

In some embodiments, a score vector may be determined by the operation between the feature vector and the weight matrix to which the noise is added. An i-th element of the score vector may represent a score corresponding to (or being) the probability that the input data (corresponding to the feature vector) will be determined to be in the i-th class. The score vector may be converted to a one-hot vector by one-hot encoding (the "1" element representing the most likely class).

In some embodiments, the input data inputted to the AI model 110 may be determined to be in the class corresponding to the largest value among the elements of the score vector (or the class corresponding to the " 1" of a one-hot vector). A loss function of the AI model 110 may output a difference between the class of the input data outputted by the AI model 110 and a predetermined label (ground truth value) of the input data.

In some embodiments, the AI model 110 may update weights and parameters within the AI model 110 to minimize the difference in the loss function. In addition, the perturbation of each class determined by the perturbation adder 120 may also be updated during the training of the AI model 110 (e.g., as part of a training pass).

When the weights and parameters of the AI model 110 are updated to minimize the difference in the loss function in the training of the AI model 110, the perturbation adder 120 may gradually increase the perturbation of each class by the update. In some embodiments, a normalization loss function may be added to the loss function of AI model 110 to increase the size of the perturbation. Equation 5 represents an example of the normalization loss function and Equation 6 represents the loss function of the AI model 110 with the normalization loss function added.

Equation 5

$$R(\sigma, P_{th}) = -\min(\sum \sigma_i, P_{th})$$

Equation 6

$$\mathcal{L}(x, y; \theta, \sigma) + \lambda R(\sigma, P_{th})$$

$P_{th}$ in Equation 5 and Equation 6 is a perturbation threshold to prevent the perturbation from increasing too much, and for example, the number of classes m×0.01 (0.01m) may be used as the perturbation threshold.

In some embodiments, since the perturbation of each class increases through training of the AI model 110, the AI model 110 may be trained to be robust against the noise (and by extension, noise in general) due to the increased size of the perturbation.

The perturbation adder 120 may add the noise to the weigh matrix of the classifier 112 based on the updated perturbation, and the classifier 112 may classify next input data in the input data set (training set) using the noise-added weight matrix based on the updated perturbation.

In some embodiments, when training of the AI model 110 is completed for the input data set (e.g., when a predetermined number of epochs has elapsed), the training determiner 130 may determine when to terminate training of the AI model 110 based on the size of the updated perturbation. For example, the training determiner 130 may determine whether training of the AI model 110 is to be terminated by comparing the size of the updated perturbation with a predetermined perturbation reference value. Alternatively, the training determiner 130 may calculate the class uncertainties of the respective classes based on the updated perturbations and compare the calculated class uncertainties with the uncertainty reference value to determine whether to terminate the training of the AI model 110.

In some embodiments, the training determiner 130 may determine the class uncertainty for each class based on the updated perturbation (S140). For example, Equation 7 represents the class uncertainty calculated according to the size of the perturbation.

Equation 7

$$U_i = \exp(-100 \times \sigma_i)$$

In Equation 7, the class uncertainty $U_i$ of the i-th class may be determined by a monotonically decreasing function such as an exponential function with base values between 0 and 1 (e.g., $1/e^{100}$). In some embodiments, the training determiner 130 may make the difference in class uncertainty larger for each class by using a monotonically decreasing function such as Equation 7.

In some embodiments, the training determiner 130 may compare the class uncertainty of each class with the uncertainty reference value (S150) and determine additional collection of data for the corresponding class when class uncertainty of at least one class is greater than the uncertainty reference value (S160). Afterwards, the AI model 110 may be trained again using the training set with added data (e.g., by using data augmentation techniques).

In some embodiments, when there is a class whose updated perturbation is smaller than the perturbation reference value after the end of the pre-determined number of epochs or when there is a class whose class uncertainty determined based on the updated perturbation is larger than the uncertainty reference value, it may be determined that training of the AI model 110 for the corresponding the class is not sufficient.

When the size of the updated perturbation of a class is larger than the perturbation reference value, this may mean that the AI model 110 has been trained to be robust against perturbation even though a large level of noise is added to the classifier 112. In other words, the generalization performance of the AI model 110 for the corresponding class may be determined to be high. Alternatively, when the class uncertainty of a class is smaller than the uncertainty reference value, the classification performance of the AI model 110 for the corresponding class may be determined to be high.

For additional collection of data for a specific class, a domain where data for the corresponding class can be collected may be determined. For example, when the data is image data captured during a manufacturing process of a semiconductor and the class that requires additional collection is a ball break on the front of the semiconductor wafer, a domain where image data on the front of the wafer can be collected is determined and then image data included in the corresponding class (ball broken) in the corresponding domain may be collected.

When data of a class with a perturbation size smaller than the perturbation reference value or a class with class uncertainty larger than the uncertainty reference value is additionally collected, the AI model 110 may perform additional training with the additionally collected data set. The AI model 110 may perform training and update the perturbation until the perturbation size of the class for which additional data is collected becomes larger than the perturbation reference value or until the class uncertainty of the class becomes smaller than the uncertainty reference value.

When the perturbation size of all classes is greater than the perturbation reference value or the class uncertainty of all classes is smaller than the uncertainty reference value, the training determiner 130 may terminate training of the AI model 110 (S170).

In some embodiments, the class uncertainty of the AI model 110 for a class may be used as an indicator of performance of the trained the AI model 110 for the class. By measuring the class uncertainty for each class of the AI model 110 which the training determiner 130 trains, the performance of the AI model 110 may be verified using only the training data set (i.e., without need for a separate test set).

According to the device and method for AI model training, the AI model 110 trained using the training set does not need to be verified by a separate test set, and therefore time and cost that would otherwise be required to generate the test set can be saved. In other words, there is no need for a test set generated by strict requirements (e.g., no overlap with the training set, data to be strictly and accurately labeled, a sufficiently large amount of data to be included, etc.), and therefore the cost and time saved can be considerable.

In addition, in an example implementation, classes that require additional data collection can be identified, and therefore the time and cost required to indiscriminately collect data for all classes can be saved and the problem of insufficient data for a specific class can be prevented.

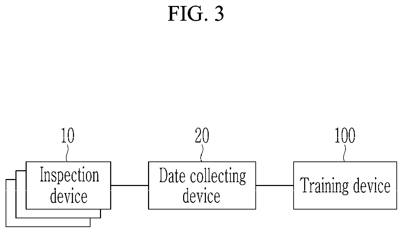

FIG. 3 illustrates a training system of an AI model according to one or more embodiments.

Referring to FIG. 3, a training system of an AI model according to one or more embodiments may include a training device 100 that trains an AI model, inspection devices 10, and a data collecting device 20.

In some embodiments, the inspection devices 10 may store product images acquired for product inspection, such as non-destructive inspection and destructive inspection of products. The inspection devices 10 may acquire the product images during a process of manufacturing the product and may perform non-destructive inspection using the product images. The inspection devices 10 may sample products during the manufacturing process and perform destructive inspection on the sampled products.

In some embodiments, the data collecting device 20 may collect product images for training and testing of the AI model from the inspection devices 10. Alternatively, the data collecting device 20 may acquire images (e.g., of the roads and background) for autonomous driving of the vehicle. In this case, the images may include various types of objects (people, vehicles, structures, buildings, traffic signal devices, lanes, crosswalks, etc.).

In some embodiments, the training device 100 may determine class uncertainties of respective classes of the AI model based on perturbations updated through training of the AI model. For example, when the size of the updated perturbation for at least one class is large, the training device 100 determines that the class uncertainty for the corresponding class is high and may re-train the AI model for the class. Alternatively, the training device 100 may re-train the AI model for the class when the class uncertainty determined based on the size of the updated perturbation for at least one class is high.

In some embodiments, the training device 100 may request a data collecting device 20 to collect additional data for classes determined to have relatively high class uncertainties for additional training of the AI model. The data collecting device 20 may determine a domain where data of the class can be collected in order to additionally collect data of a class with high class uncertainty.

For example, when the data is image data collected during the manufacturing process of a semiconductor and a class for which additional collection is requested is a class of having a crack on the back of a wafer, the data collecting device 20 may determine that images of the backs of semiconductor wafers is a domain (corresponding to the crack class) for additional image data collection and acquire additional images of the domain from one or more specific corresponding inspection devices 10 that acquire images of the domain.

As another example, when the data is image data of semiconductors, and when a class for which additional collection is requested is a class of not meeting a threshold dimension (CD) standard of a semiconductor cross-section, the data collecting device 20 may collect additional image data that belongs to the corresponding class (CD substandard) from a destructive inspection device (e.g., a scanning electron microscope) that provides semiconductor images of the corresponding domain.

In this way, the training device 100 according to one or more embodiments may determine a class that requires additional training of the AI model, may obtain the same, and may thereby save data collection time and cost.

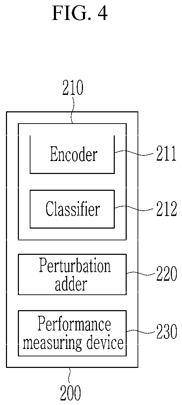

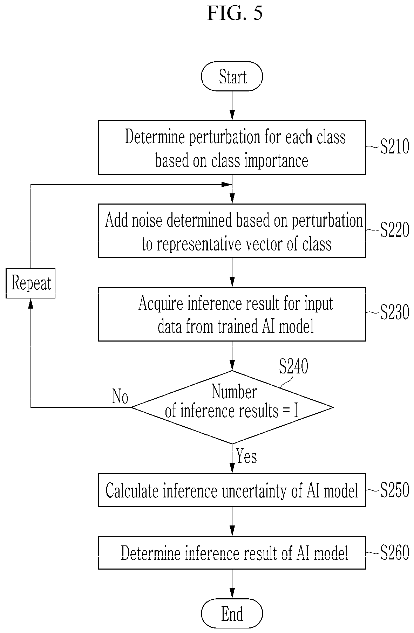

FIG. 4 illustrates an inference device using an AI model according to one or more embodiments and FIG. 5 illustrates an inference method using an AI model according to one or more embodiments.

Referring to FIG. 4, an inference device 200 according to one or more embodiments may include an AI model 210, a perturbation adder 220, and a performance measuring device 230.

In some embodiments, the AI model 210 is a trained model and may include an encoder 211 and a classifier 212 (e.g., a linear classifier). The encoder 211 may extract features from input data inputted to the AI model 210 and generate a feature vector thereof. The classifier 212 may classify (e.g., infer) a class of the input data through operations between a weight matrix for classification of the input data and the feature vector of the input data. In some embodiments, noises based on respective perturbations of the respective classes may be added to the weight matrix of the classifier 212.

In some embodiments, the AI model 210 may perform inference to classify input data into one of the classes. The input data may be an image, a text, voice, or the like, and the class may be a category to which the input data belongs; such classification may be the purpose of the AI model 210. For example, if the input data is an image acquired during autonomous driving of a vehicle, the classes into which the image might be classified might include person, vehicle, road structure, buildings, traffic signal device, lane, crosswalk, etc.

In some embodiments, the input data may be a product image acquired during a process of manufacturing a product (e.g., a semiconductor), and each class may represent a type of defect that occurs during the manufacturing process of the product. For example, classes may be contamination, foreign substances, broken, state of soldering marks (balls), character abnormality, and the like.

In some embodiments, the classifier 212 of the AI model 210 may use a weight matrix to convert the feature vector output by the encoder 211 into a score vector with the same dimension as the number of classes. A linear classification process performed in the classifier 212 may be implemented as expressed by Equation 1.

In some embodiments, the classifier 212 may convert the feature vector of input data to the score vector representing a score of each class through an operation such as Equation 1.

In some embodiments, a weight matrix of the classifier 212 may be a set of representative vectors of the respective classes. The weight matrix of the classifier 212 and a representative vector of an i-th class may be expressed as Equation 2 and Equation 3.

In some embodiments, an element of the score vector representing a result of linear classification may represent a score of the feature vector as applied to each class. Each score may represent the probability that the input data of the feature vector belongs to the class corresponding to the score. The dimension of the score vector may be equal to the number of classes, which is m. Among the elements of the score vector, the elements of the score vector corresponding to the i-th class may be determined by a matrix multiplication operation between the feature vector and the representative vector of the i-th class.

In some embodiments, the perturbation adder 220 may determine perturbations of the respective classes based on importances of the respective classes, determine noises of the respective classes according to the respective perturbations of the classes, and add the determined noises into the respective representative vectors of the classes included in the weight matrix of the classifier 212. Table 1 shows class importance for determining defects in the semiconductor products (wafers, etc.).

(Table 1)

| Class | Class importance |
|---|---|
| Missing ball (no soldering) | 1 |
| Crack | 2 |
| Ball short circuit (soldering sticks together) | 3 |
| ⋮ | ⋮ |
| Foreign substance | 30 |
| Text abnormality | 31 |
| ⋮ | ⋮ |

(continued)

| Class | Class importance |
|---|---|
| Observation error | 50 |

In Table 1, the number of class importances may indicate the priorities of the classes. In the example of Table 1, the class of missing balls is the highest priority class, and the class of observation errors is the lowest priority class. In other words, since classes such as missing balls, cracks, and short circuits are classes that the AI model 210 needs to accurately infer, the accuracy of inference for the classes may have a significant impact on the overall performance of the AI model 210. On the other hand, if the inference accuracy of the AI model 210 for classes such as observation error is relatively low, the overall performance of the AI model 210 may not be as significantly affected. In some embodiments, the classes classified by the AI model 210 may have different class importance and the accuracy and/or uncertainty of inference may be measured differently for each class depending on the corresponding class importance. The perturbation adder 220 may determine relatively large perturbation for a class with relatively high class importance and relatively low perturbation for a class with relatively low class importance. For example, when there are m classes, the perturbation adder 220 may add noise to a representative vector of a class with the highest class importance using the largest size perturbation $\sigma = m/100$. Alternatively, the perturbation adder 220 may add noise to a representative vector of a class with the lowest class importance using the smallest size perturbation $\sigma = 1/100$.

In some embodiments, the performance measuring device 230 may measure the performance of the AI model 210 based on the inference results for the same input data of the AI model 210 that includes the classifier 212 with noises having been added according to class importances. The performance measuring device 230 may determine the inference uncertainty of the AI model 210 based on the inference results of the AI model 210 and measure the performance of the AI model 210 according to the inference uncertainty of the AI model 210. The inference uncertainty of the AI model 210 may be determined by the standard deviation or variance of the inference results for the same input data.

According to one or more embodiments, the perturbation adder 220 may add the noise according to the perturbation based on the class importance to the representative vector of the class, and then the performance measuring device 230 may measure the performance of the inference device 200 with another reference according to the class importance. For example, the performance measuring device 230 may measure the inference performance of the AI model 210 for classes with relatively high class importance and more leniently measure the inference performance of the AI model 210 for classes with relatively low class importance.

In some embodiments, for a class with relatively high class importance, when the perturbation adder 220 adds the corresponding relatively high noise (determined based on a perturbation that is relatively large due to the high class importance) to the representative vector of the class, there is a high possibility of deterioration in the inference performance of the AI model 210 for the class. Even though the noise added to the representative vector is relatively large (based on the relatively large perturbation), when the inference uncertainty of the AI model 210 is measured to be low, the performance measuring device 230 may strictly evaluate the reliability of the AI model 210.

On the other hand, for a class with relatively low class importance, when the perturbation adder 220 adds corresponding noise (determined based on perturbation that is relatively small due to the small class importance) to the representative vector of the class, the possibility of deterioration in the inference performance of the AI model 210 for the class is low. When the class importance is low, the performance of the AI model 210 for the class is not very important, and thus the inference performance of the AI model 210 may not need to be strictly evaluated.

Referring to FIG. 4 and FIG. 5, in some embodiments, the perturbation adder 220 may determine the perturbations of the respective classes based on the respective class importances (S210) and add the respective noises (determined based on the respective perturbations) to the respective representative vectors of the classes (S220). A representative vector w'; of an i-th class to which the noise according to the perturbation is added may be given as Equation 4.

The perturbation adder 220 may randomly sample the noises from a pre-determined noise distribution (e.g., following the standard normal distribution) and may scale the randomly sampled noises by the respective pre-determined perturbations according to the respective class importances. The perturbation adder 220 may add the noise scaled by the perturbation $\sigma_i$ to the representative vector of the class corresponding to the perturbation $\sigma_i$. When noise scaled by a relatively large perturbation is added to the corresponding representative vector of the corresponding class, the inference uncertainty of that class may increase.

In some embodiments, the performance measuring device 230 may acquire an inference result for an input data from a trained AI model 210 (S230). The trained AI model 210 may perform inference on the input data using the weight matrix including the representative vector with the noise added and output the score vector of the input data as the inference result.

In some embodiments, the score vector output from the trained AI model 210 may include scores of the input data for each of the respective classes that the AI model 210 has been trained to recognize. An i-th element of the score vector may represent a score of the input data with respect to the i-th class. In this case, the inference result of the trained AI model 210 may be the class corresponding to the largest element of the score vector. For example, when the largest element in the score vector is the i-th element, the inference result of the trained AI model 210 may be determined to be: "input data is the i-th class".

In some embodiments, the performance measuring device 230 may repeatedly perform noising and collecting inference results of the trained AI model 210 for the same input data and then determine inference uncertainty of the AI model 210 when the number of repetitions reaches a predetermined number I (S240 and S250).

As just noted, the steps S220 and S230 may be repeated until the number of collected inference results reaches the predetermined number I. Until the I inference results are collected, the perturbation adder 220 may sample the noise again from the noise distribution and add the newly sampled noise scaled by pre-determined perturbation according to the class importance to the representative vector of each class. The trained AI model 210 may re-output an inference result for the same input data using a weight matrix with the noise repeatedly added according to the repeated new sampling.

In some embodiments, the performance measuring device 230 may measure the performance of the trained AI model 210 based on the inference results of the trained AI model 210 for the same input data.

In some embodiments, the performance measuring device 230 may determine a standard deviation $\sigma_{infer}$ of the inference results of the trained AI model 210 as the inference uncertainty of the trained AI model 210. For example, when the standard deviation of the inference results of the trained AI model 210 satisfies (e.g., is greater than) a predetermined deviation threshold, the performance measuring device 230 may determine that the inference uncertainty of the trained AI model 210 is high and may not use the inference result of the trained AI model 210. Alternatively, when the standard deviation of the inference results of the trained AI model 210 does not satisfy (e.g., is smaller than or equal to) the predetermined deviation threshold, the performance measuring device 230 may determine the inference uncertainty of the trained AI model 210 to be a reliable level and use the inference result.

In some embodiments, the standard deviation $\sigma_{infer}$ of the I inference results output by the trained AI model 210 may be statistically determined by elements with a maximum score in each of the I score vectors. In this case, the indices of the elements (element instances of different score vectors) with the maximum score in the I score vectors inferred from the same input data may all be the same.

In some embodiments, when the indices of the elements with maximum scores in the I score vectors inferred from the same input data are not all the same, the performance measurer 230 may determine that the inference uncertainty of the trained AI model 210 is maximal. In other words, when all I score vectors are not encoded with the same one-hot vector, it is determined that (i) different inference results are output for the same input data and (ii) thus the performance measuring device 230 may not trust the inference results of the trained AI model 210 without calculating the standard deviation of the inference results (i.e., the standard deviation may be calculated to determine reliability/uncertainty).

In some embodiments, the performance measuring device 230 may determine inference uncertainty of the trained AI model 210 from the standard deviation $\sigma_{infer}$ of the inference results of the trained AI model 210 using a predetermined function. Equation 8 represents inference uncertainty $U_{infer}$ of the trained AI model 210 determined using the predetermined function from the standard deviation $\sigma_{infer}$ of the inference results.

$$\text{Equation 8}$$

$$U_{infer} = \exp\left(100 \times \sigma_{infer}\right)$$

Referring to Equation 8, an exponential function may be used to determine the inference uncertainty $U_{infer}$. In some embodiments, a monotonically increasing function such as the exponential function may be used as the pre-determined function for determination of the inference uncertainty.

For example, when the inference uncertainty of the trained AI model 210 is higher than a predetermined uncertainty threshold, the performance measuring device 230 may not use the inference result of the trained AI model 210 as a definitive conclusion/inference about the corresponding input data. Alternatively, when the inference uncertainty of the trained AI model 210 is lower than the predetermined uncertainty threshold, the performance measuring device 230 may use the inference result of the trained AI model 210 as a final inference about the corresponding input data.

In some embodiments, when the inference uncertainty of the trained AI model 210 is determined to be high, re-training of the trained AI model 210 may be determined to be needed. In this case, the performance measuring device 230 may determine that the re-training of the AI model 210 is only to be performed for those classes that have high class importance. When re-training of the trained AI model 210 is determined to be needed, only data of the class(es) indicated (by the inference result) as having high inference uncertainty may be additionally collected.

When it is determined that the inference result of the trained AI model 210 is reliable, the inference result of the trained AI model 210 may be used (S260).

As described above, the inference device 200 according to one or more embodiments adds the noise based on the perturbation for each of the classes to the weight matrix of the trained AI model 210 to more strictly measure the performance of the trained AI model 210 for classes of high importance. That is, although the noise based on the large perturbation is added to the representative vector corresponding to the high-importance class, when the trained AI model 210 outputs the inference result with high reliability for the class, the inference device 200 may use the inference result of the trained AI model 210. Accordingly, the performance of the trained AI model 210 can be easily measured according to the importance of the class and the training goal of the AI model 210 can be accurately targeted and improved.

In addition, the performance of the trained AI model 210 may be verified in the inference step of the AI model through the inference uncertainty of the trained AI model 210, thereby improving classification performance for classes of high importance. For example, in the case of product defect detection through the trained AI model 210, the defect detection performance of the trained AI model 210 can be improved, and, depending on the application, yield of the product can be expected to improve, autonomous driving may improve, etc.

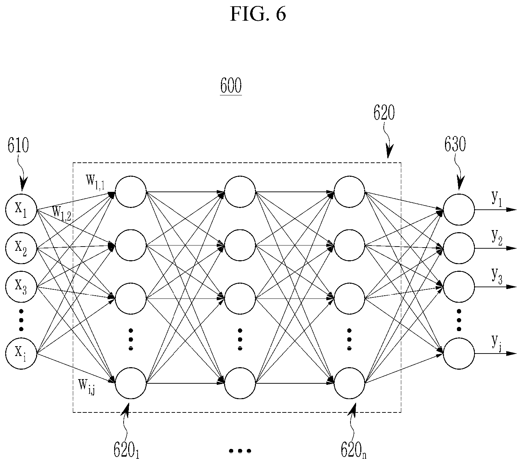

FIG. 6 shows an artificial neural network according to one or more embodiments.

Referring to FIG. 6, a neural network (NN) 600 according to one or more embodiments may include an input layer 610, a hidden layer portion 620, and an output layer 630. The input layer 610, layers in the hidden layer portion 620, and the output layer 630 may include respective sets of nodes, and the strength of the connections between the nodes of layers (generally, adjacent, but not necessarily) may be represented as weights (weighted connections). The nodes included in the input layer 610, the layers in the hidden layer portion 620, and the output layer 630 may be fully connected to each other. In some embodiments, the number of parameters (e.g., the number of weights and the number of biases) may be equal to the number of weighted connections in the neural network 600.

The input layer 610 may include input nodes $x_1$ to $x_i$, and the number of input nodes $x_1$ to $x_i$ may correspond to the number of independent variables of the input data. A training set may be input to the input layer 610 for training of the neural network 600. When test data is input to the input layer 610 of the trained neural network 600, an inference result may be output from the output layer 630 of the trained neural network 600. In some embodiments, the input layer 610 may have a structure suitable for processing a large-scale input. In a non-limiting example, the neural network 600 may include a convolutional neural network combined with fully connected layer(s).

The layers of the hidden layer portion 620 may be located between the input layer 610 and the output layer 630 and may include at least one of hidden layers $620_1$ to $620_n$. The output layer 630 may include at least one of output nodes $y_1$ to $y_j$. An activation function may be used in the layers of the hidden layer portion 620 and in the output layer 630. In some embodiments, the neural network 600 may be learned by adjusting weight of the nodes included in the hidden layer portion 620.

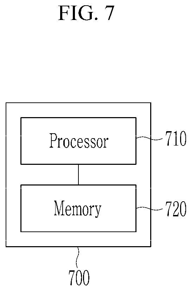

FIG. 7 illustrates a system for measuring performance of an AI model according to one or more embodiments.

A system for measuring performance of an AI model according to one or more embodiments may be implemented as a computer system.

Referring to FIG. 7, the computer system 700 may include one or more processors 710 and a memory 720. The memory 720 may be connected to the one or more processors 710 and may store instructions or programs configured to cause the one or more processors 710 to perform a process including any of the methods describeds above.

The one or more processors 710 may realize functions, stages, or methods described for the various embodiments. An operation of the computer system 700 according to one or more embodiments may be realized by the one or more processors 710. The one or more processors 710 may include a GPU, a CPU, and/or an NPU. When the operation of the computer system 700 is implemented by the one or more processors 710, each task may be divided among the one or more processors 710 according to load. For example, when one processor is a CPU, the other processors may be a GPU, an NPU, an FPGA, and/or a DSP.

The memory 720 may be provided inside/outside the processor, and may be connected to the processor through various means known to a person skilled in the art. The memory represents a volatile or non-volatile storage medium in various forms (but not a signal per se), and for example, the memory may include a read-only memory (ROM) and a random-access memory (RAM). In another way, the memory may be a PIM (processing in memory) including a logic unit for performing self-contained operations (e.g., bit cells may function as both persistent bit storage and may have circuit elements for also performing operations on the stored bit data).

In another way, some functions (e.g., training the yield predicting model and/or the path generating model, inference by the yield predicting model and/or the path generating model) of the yield predicting device may be provided by a neuromorphic chip including neurons, synapses, and inter-neuron connection modules. The neuromorphic chip is a computer device simulating biological neural system structures, and may perform neural network operations.

Meanwhile, the embodiments are not only implemented through the device and/or the method described so far, but may also be implemented through a program (instructions) that realizes the function corresponding to the configuration of the embodiment or a recording medium on which the program is recorded, and such implementation may be easily implemented by anyone skilled in the art to which this description belongs from the description provided above.

Specifically, methods (e.g., yield predicting methods, etc.) according to the present disclosure may be implemented in the form of program instructions that can be performed through various computer means. The computer readable medium may include program instructions, data files, data structures, etc. alone or in combination. The program instructions recorded on the computer readable medium may be specifically designed and configured for the embodiments. The computer readable recording medium may include a hardware device configured to store and execute program instructions. For example, a computer-readable recording medium includes magnetic media such as hard disks, floppy disks and magnetic tapes, optical recording media such as CD-ROMs and DVDs, and optical disks such as floppy disks. It may be magneto-optical media, ROM, RAM, flash memory, or the like. A program instruction may include not only machine language codes such as generated by a compiler, but also high-level language codes that may be executed by a computer through an interpreter or the like.

The computing apparatuses, the electronic devices, the processors, the memories, the displays, the information output system and hardware, the storage devices, and other apparatuses, devices, units, modules, and components described herein with respect to FIGS. 1-7 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-7 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card or a micro card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims, and all variations within the scope of the claims are to be construed as being included in the disclosure.

**Claims**

1. A computer-implemented method for measuring performance of an artificial intelligence, AI, model, wherein the AI model is trained to infer classes, the method comprising:

   determining noises based on perturbations;
   adding the noises to respective representative vectors corresponding to respective classes for an input image determined by a linear classifier of the AI model; and
   generating an inference uncertainty of the AI model for the input image based on the inference results outputted by the linear classifier of the AI model using the noise-added representative vectors.

2. The computer-implemented method of claim 1, wherein
   the determining noises based on perturbations comprises:

   sampling the noises in a noise distribution that follows standard normal distribution; and
   scaling the sampled noise by a size of the perturbation, and
   wherein the adding the noises to the respective representative vectors comprises independently adding the scaled noises to the respective representative vectors, wherein preferably the sampling the noises in the noise distribution that follows standard normal distribution comprises
   independently sampling the noises for the respective classes in the noise distribution.

3. The computer-implemented method according to any one of the previous claims, further comprising
   determining the perturbations in proportion to the respectively corresponding importances of the respective classes.

4. The computer-implemented method according to any one of the previous claims, wherein

   the inference results correspond to class classification results of feature vectors of an image generated by an encoder of the AI model, and the class classification results are determined by the feature vectors being classified into a class of the respective classes by the linear classifier using the noise-added representative vectors; and
   preferably further comprising
   receiving a predetermined number of class classification results from the linear classifier as the inference results.

**5.** The computer-implemented method according to claim 4, further comprising:

determining whether the standard deviation of the inference results satisfies a predetermined deviation threshold condition;

not using the inference results of the AI model as a final result when the determination that the standard deviation of the inference results satisfies the predetermined deviation threshold condition or using the inference result of the AI model as a final result when the determination that the standard deviation of the inference results does not satisfy the predetermined deviation threshold condition;

wherein preferably:

the standard deviation is statistically determined from score vectors output as the inference results.

**6.** The computer-implemented method according to any one of the previous claims,
wherein maximal elements in the respective score vectors are in a same position within the score vectors.

**7.** A device for measuring performance of an artificial intelligence, AI, model, wherein the AI model is trained to infer classes the device comprising:

one or more processors and a memory; and

the memory storing instructions configured to cause the one or more processors to perform the method of any one of the previous method claims.

**8.** A computer program comprising instructions which, when the program is executed by a computer, cause the computer to carry out the steps of any one of the previous method claims.

**9.** A computer-implemented method for training an artificial intelligence (AI) model to infer classes, the method comprising:

adding noises determined based on respective perturbations to respective representative vectors corresponding to the respective classes;

updating the perturbations in response to the AI model being trained using a weight matrix comprising the noise-added representative vectors; and

determining to terminate training of the AI model based on the updated perturbations.

**10.** The computer-implemented method of claim 9,
Wherein the adding noises determined based on respective perturbations to respective representative vectors corresponding to respective classes comprises:

sampling the noises in a noise distribution that follows normal distribution;

scaling the sampled noises by sizes of the respective perturbations; and

adding the scaled noises to the respective representative vectors;

wherein preferably :

the sampling the noises in noise distribution that follows normal distribution comprises independently sampling the noises for the respective classes in the noise distribution.

**11.** The computer-implemented method of any one of claims 9-10, wherein
adding noises determined based on respective perturbations to respective representative vectors corresponding to respective classes comprises:

sampling a first noise to be added to a first representative vector of the representative vectors from a noise distribution that follows normal distribution and sampling a second noise to be added to a second representative vector of the representative vectors from the noise distribution; and

adding the first noise to the first representative vector and adding the second noise to the second representative vector.

**12.** The computer-implemented method of any one of claims 9-11, wherein:
sizes of the updated perturbations are larger than sizes of the perturbations before the updating of the perturbations; and/or wherein:

the determining to terminate training of the AI model based on the updated perturbations comprises comparing sizes of the updated perturbations with a predetermined perturbation reference value.

13. The computer-implemented method of any one of claims 9-12, further comprising:

generating class uncertainties of the respective classes based on the updated perturbations; and
determining to terminate training of the AI model based on the class uncertainties of the respective classes.

14. A device for training an artificial intelligence, AI, model to infer classes, the device comprising:

one or more processors and a memory; and
the memory storing instructions configured to cause the one or more processors to perform the method of any one of the previous claims 9-13.

15. A computer program comprising instructions which, when the program is executed by a computer, cause the computer to carry out the steps of any one of the previous method claims 9-13.

FIG. 1

FIG. 2

```
                        ( Start )
                            │
                            ▼
            ┌──────────────────────────────────┐
            │ Determine perturbation for each class │──S110
            └──────────────────────────────────┘
                            │
                            ▼
            ┌──────────────────────────────────┐
            │      Add noise determined based       │──S120
            │   on perturbation to weight value matrix │
            └──────────────────────────────────┘
                            │
   ┌────────────────────────┤
   │                        ▼
  S160          ┌──────────────────────────────────┐
   │            │  Train AI model based on noise-added  │──S130
┌─────────────┐ │   weight value matrix and feature vector │
│ Additionally │ └──────────────────────────────────┘
│ collect data │              │
│ of corresponding│           ▼
│    class     │ ┌──────────────────────────────────┐
└─────────────┘ │ Determine class uncertainty based on updated │──S140
   │            │  perturbation through AI model training  │
   │            └──────────────────────────────────┘
   │                        │
   │                        ▼         S150
   │              ╱─────────────────────╲
   │      No     ╱   Class uncertainty    ╲
   └───────────<    < threshold value ?     >
                 ╲─────────────────────╱
                            │ Yes
                            ▼
            ┌──────────────────────────────────┐
            │     Terminate training of AI model    │──S170
            └──────────────────────────────────┘
                            │
                            ▼
                         ( End )
```

FIG. 3

10            20            100

| Inspection device | Date collecting device | Training device |

FIG. 4

FIG. 5

Start

Determine perturbation for each class
based on class importance ——S210

Add noise determined based on perturbation
to representative vector of class ——S220

Acquire inference result for input
data from trained AI model ——S230

Repeat

S240
No — Number
of inference results = I

Yes

Calculate inference uncertainty of AI model ——S250

Determine inference result of AI model ——S260

End

FIG. 6

FIG. 7

Processor — 710

Memory — 720

700

Europäisches
Patentamt

European
Patent Office

Office européen
des brevets

## EUROPEAN SEARCH REPORT

**Application Number**

EP 25 15 0167

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/180242 A1 (LEE TAESUNG [US] ET AL) 9 June 2022 (2022-06-09) <br> * abstract * <br> * paragraph [0004] - paragraph [0008] * <br> * paragraph [0020] - paragraph [0035] * <br> * paragraph [0051] - paragraph [0068] * <br> * paragraph [0137] - paragraph [0176] * <br> * paragraph [0111] - paragraph [0192] * <br> - - - - - | 1-15 | INV. <br> G06N3/094 <br> G06N3/045 <br> G06N3/09 <br> G06N5/01 <br><br> ADD. <br> G06N3/063 |
| A | WO 2019/238976 A1 (UNIV LIEGE [BE]) 19 December 2019 (2019-12-19) <br> * abstract * <br> * page 30, line 16 - page 39, line 8 * <br> - - - - - | 1-15 | |
| A | ANINDYA SARKAR ET AL: "Enforcing Linearity in DNN succours Robustness and Adversarial Image Generation", ARXIV.ORG, CORNELL UNIVERSITY LIBRARY, 201 OLIN LIBRARY CORNELL UNIVERSITY ITHACA, NY 14853, 17 October 2019 (2019-10-17), XP081517249, <br> * abstract * <br> * sections 1, 3, 4 * <br> - - - - - | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 20 May 2025 | Papadakis, Georgios |

EPO FORM 1503 03.82 (P04C01)

## ANNEX TO THE EUROPEAN SEARCH REPORT
## ON EUROPEAN PATENT APPLICATION NO.

EP 25 15 0167

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2025

| Patent document cited in search report | Publication date | Patent family member(s) | Publication date |
|---|---|---|---|
| US 2022180242 A1 | 09-06-2022 | CN 116670693 A | 29-08-2023 |
| | | DE 112021005847 T5 | 24-08-2023 |
| | | GB 2617735 A | 18-10-2023 |
| | | JP 2023551976 A | 13-12-2023 |
| | | US 2022180242 A1 | 09-06-2022 |
| | | WO 2022123372 A1 | 16-06-2022 |
| WO 2019238976 A1 | 19-12-2019 | EP 3582142 A1 | 18-12-2019 |
| | | WO 2019238976 A1 | 19-12-2019 |

EPO FORM P0459

For more details about this annex : see Official Journal of the European Patent Office, No. 12/82